# EUROPEAN PATENT SPECIFICATION

(11) **EP 2 526 288 B1**
(45) Date of publication and mention of the grant of the patent: **28.06.2017**
(21) Application number: 11702133.7
(22) Date of filing: 19.01.2011
(51) Int. Cl.: F03D 1/06

(54) **SEGMENTED ROTOR BLADE EXTENSION PORTION**
ERWEITERUNGSTEIL FÜR EIN SEGMENTIERTES ROTORBLATT
PARTIE FORMANT PROLONGATEUR DE PALE DE ROTOR SEGMENTÉE

(30) Priority: 22.01.2010 US 297291 P; 21.01.2010 DK 201070020
(43) Date of publication of application: 28.11.2012
(73) Proprietor: Vestas Wind Systems A/S, 8200 Aarhus N (DK)
(72) Inventor: HANCOCK, Mark, Southampton Hampshire SO15 5HN (GB); BECH, Anton, DK-6950 Ringkøbing (DK); VRONSKY, Tomas, Woolston Hampshire SO19 9FR (GB)
(74) Representative: Vestas Patents Department
(86) International application number: PCT/DK2011/050016
(87) International publication number: WO 2011/088835

(56) References cited:
- WO-A1-2007/071249
- US-A1- 2008 187 442

## Description

The present invention relates to the field of rotor blades for wind turbine installations. In particular, it relates to means for extending a chord-wise dimension of a portion of said rotor blades.

Wind turbine installations are continuously being developed to enable the installation to capture and subsequently convert an increasing amount of the energy represented by the wind into electricity. In particular, it is desirable to increase the surface area of the blade that is presented to the wind to enable a more efficient capture of said energy. However, in providing a rotor blade having an increased surface area, increased loading is experienced by the structure of the blade.

Blade design involves optimisation of a number of characteristics of the blade. This optimisation typically involves selection of the aerofoil section to be used and variation of the aerofoil section along the span-wise length of the blade, camber of the blade and twist of the blade along a span-wise length. A rotor blade is varied in geometry in the span-wise direction, as the speed of the blade through the air increases with distance from the rotor hub. Furthermore, as the distance from the rotor hub increases, the air becomes "cleaner", in other words, there is less interference from other bodies such as the rotor hub itself and other, adjacent, blades. In order to achieve optimal design for the blade in a root region of the blade, i.e. a proximal end of the blade, it is desirable to extend the chord-wise dimension to compensate for slower tangential velocity in this region. However an increase in dimension of the blade can cause structural problems.

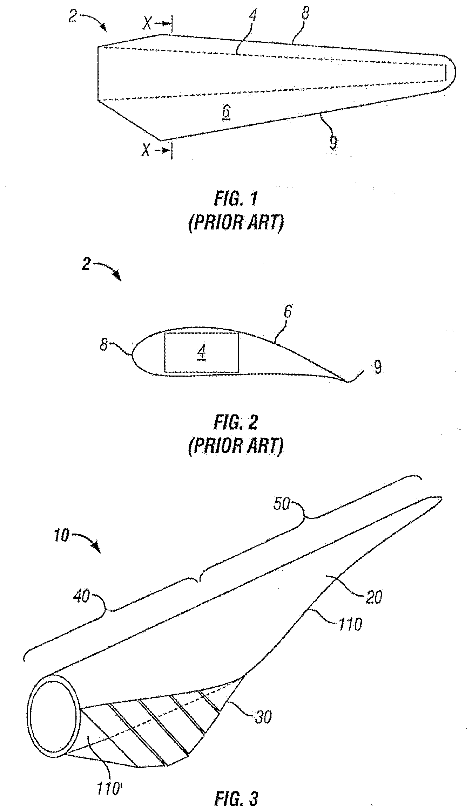

Figure 1 shows one type of conventional rotor blade 2 comprising a load bearing, spar member 4 extending substantially the length of the blade, to which is connected an outer surface 6 of the blade 2. This outer surface is, generally, smoothly configured to enable air (or other fluid) to pass over in a streamlined manner. Rotor blades experience significant structural loading in operation, not only due to the aerodynamic loads exerted thereon but also due to the magnitude and weight of the structure of the rotor blade itself.

These loads are primarily transmitted to the spar member 4 and from there to a hub (not shown) of the wind turbine. In operation, the rotor blades 2 of a wind turbine rotate through a substantially vertically orientated plane. Consequently, significant cyclic loading is experienced by each blade. In particular, fluctuating tensile and compressive loads are experienced along a foremost or "leading" edge 8 of the blade 2 and along a rearmost or "trailing" edge 9 of the blade 2. Hereinafter, these particular loads are referred to as "edge-wise loads". The edge-wise loads are most significant in a root region of the rotor blade 2, for example for the 30% of the blade nearest to a hub of the wind turbine (once installed). Whilst the edge-wise loads are experienced by both the leading edge 8 and the trailing edge 9, the trailing edge is located further from the neutral axis of the rotor blade 2 and therefore higher strains are experienced at the trailing edge 9 of the rotor blade. Furthermore, by locally increasing the chord-wise dimension in a root region of the rotor blade 2 (as depicted in Figure 1), the trailing edge 9 describes a convex profile when viewed in plan form. It follows that when edge-wise loads are experienced along this profile, the material bounded by the trailing edge 9 is also exposed to the increased, fluctuating strain. In particular, a difficult to resist chord-wise load is exerted on the material effectively compressing the trailing edge 9 tending to cause this material to buckle.

In some rotor blades the cross section varies from representing an aerofoil at a region of maximum chord dimension to becoming circular in cross section at a root of the rotor blade. Such a variation means that the curvature described by the trailing edge 9 (when viewed in plan form) is more extreme. As the curvature is more extreme, the fluctuating strains experienced by the material bounded by the trailing edge are correspondingly increased. It is, therefore, desirable to provide a means for increasing the chord of the blade, in a localised manner to enhance the aerodynamic performance of the rotor blade, whilst minimising a corresponding increase in structural loading.

US2008/187442 discloses a wind turbine rotor blade with a trailing edge assembly formed from a plurality of projections shaped as saw teeth in order to mitigate noise.

WO2007/071249 discloses a series of airfoil profiles for a wind turbine rotor blade and a trailing edge part of the blade that can be assembled on to the main part of a blade.

According to a first aspect, the present invention provides a wind turbine rotor blade extension portion configured to be connectable to a rotor blade, the extension portion comprising a plurality of segments, located adjacent one another in a span-wise sense, an interface between adjacent segments being configured to inhibit transmission of loads between the segments, wherein each segment comprises a first surface forming a suction side; a second surface forming a pressure side; and a third surface forming a trailing surface, the first surface being spaced from the second surface at a proximal region of the extension portion and the third surface connecting the first surface and the second surface at a distal region of the extension portion to, thereby generate an extended trailing portion of a rotor blade to which the extension portion is connected, in use; characterised in that
sealing means are provided between adjacent segments to inhibit leakage of fluid therethrough.

By providing an extension portion to be appended to a rotor blade, the rotor blade itself is able to achieve an optimally large aerodynamic root chord whilst maintaining a substantially straight load path along which accumulated edge- wise loads from an outboard region of the blade can be transmitted. The rotor blade can, therefore, be optimally structurally configured. The extension portion only contributes to the overall structural loading of a rotor blade, to which it is attached in a cantilevered manner, through aerodynamic and gravitational loads generated from the extension portion itself. Furthermore, the extension portion comprises a plurality of segments having interfaces between respective adjacent segments that inhibit transmission of longitudinal loads along the extension portion. Since these interfaces are only lightly loaded, the extension portion can be readily dismantled and reassembled which enables simpler transportation of the rotor blade.

The third surface that connects the first surface and the second surface results in the trailing portion having a truncated edge in a "U" shape.

The first and second surfaces of each segment may comprise one or more of the group of a fibre reinforced plastics material, for example glass fibre reinforced plastic (GFRP), a thermoplastic material, wood and a laminate or otherwise composite material. Use of such materials, enable the extension portion to remain as light weight as possible and, therefore to contribute to the overall weight of the rotor blade as little as possible. In so doing, any further increases in edge-wise loading are minimised.

The first and second surfaces of each segment may be formed from a single, folded or appropriately formed piece of material. Lateral edges (i.e. those extending in a substantially chord-wise direction) of adjacent segments may comprise cooperating protruding sections that are configured to slideably interconnect with one another to permit longitudinal relative movement between the adjacent segments. Such a configuration inhibits transmission of longitudinal loads between the segments whilst presenting a convoluted path for flow of fluid between the two sections (in a through thickness direction) thus inhibiting ingress or egress of fluid between adjacent segments.

In particular, a brush seal or a lip seal may be provided between the cooperating, protruding sections of adjacent segments. Alternatively, a sealing member of the sealing means may be formed from a material having greater flexibility than the material of the segments, said sealing member comprising cooperating protruding sections to directly interface with corresponding surfaces of adjacent segments such that the sealing member lies in the plane of the respective surface once installed.

The sealing means may comprise an elastomeric material.

Alternatively, lateral edges of adjacent segments may comprise a planar, or substantially planar, profile and the segments may be marginally spaced from one another. A sealing member, such as an elastomeric seal, an inflatable seal, a bellows seal or a labyrinth seal, may be provided between the adjacent segments.

According to a second aspect, the present invention provides a wind turbine rotor blade, comprising: a structurally coherent, blade portion comprising: a leading portion configured to receive fluid incident on the rotor blade; and a trailing portion, located downstream of the leading portion and configured to smoothly convey fluid passing thereover from the leading portion, wherein a root region of the blade portion is configured to be connectable to a hub of a wind turbine and the blade portion is configured to transfer smoothly loads experienced thereby to the root region of the blade portion for transfer to the hub; and an extension portion, as previously described, wherein the extension portion is configured to be appendable to the trailing portion of the blade portion, e.g. in a root region thereof.

An interface between the extension portion and the trailing portion may be configured to permit a longitudinal degree of freedom. In so doing, transmission of edge-wise loads from a rearmost edge of the trailing portion to the extension portion can be minimised. The interface may comprise a longitudinally extending protrusion, formed on one of the extension portion and the trailing portion and a cooperating, longitudinally extending retaining recess, formed on the other of the extension portion and the trailing portion. Once assembled, the protrusion (or key) is located in the retaining recess (or keyway) such that whilst the extension portion and the trailing portion are securely connected to one another, a degree of relative longitudinal movement there between, say in the range of 1 mm to 10 mm, is enabled.

Alternatively, the interface may comprise a longitudinally extending pad, fixedly bonded to each of the extension portion and the trailing portion, wherein the material from which the pad is formed enables a degree of relative movement, say in the range of 1 mm to 10mm, between the extension portion and the blade portion.

The extension portion may be connected to the trailing portion using a bolt or similar fixing mechanism configured to pass through a hole formed in one portion and be retained relative to the other portion, wherein the hole is elongate in the span-wise direction, thus enabling a degree of relative movement, say in the range of 0.1 mm to 2mm, between the extension portion and the blade portion.

The blade portion may comprise a truncated profile whereby the root region of the trailing portion is configured to receive the extension portion. In this way, the blade portion can be designed to have a reduced weight and a substantially straightened rearmost edge.

Alternatively, the blade portion may be a full wind turbine rotor blade. The addition of an extension portion to such a rotor blade enables an increase in local chord length to be achieved.

By providing a rotor blade, having a separate blade portion and extension portion, many advantages can be achieved:-
- Structural loads acting along a trailing edge of the rotor blade, in use, are shifted closer to the neutral axis of the rotor blade, thus reducing the lever arm over which such forces act.
- Transportation of the rotor blade becomes easier as the extension portion and the blade portion can be separately transported to an installation site. Costs of transportation are generally reduced if the maximum width of the rotor blade is reduced.
- The design of the rotor blade can be optimised for particular site locations by changing only the extension portion; this enhances the flexibility of a given product.
- The particularly light weight configuration of the extension portion reduces the mass of the rotor blade, further reducing costs.
- It also follows that lower gravitational loads are experienced at the hub of a wind turbine installation to which the rotor blade may be attached in use.
- The blade portion of the rotor blade is substantially narrower than a conventional rotor blade enabling the main shell mould to be correspondingly narrower. Consequently, the mould takes up less room and in particular smaller ovens are required for curing.
- Damaged extension portions can readily be replaced.

According to a third aspect, the present invention provides a wind turbine installation comprising a rotor hub supported by a tower, wherein one or more of the aforementioned rotor blades are appended to the rotor hub.

By "structurally coherent" we mean that the associated component, here the primary portion of the rotor blade, provides an effectively unitary member which efficiently transmits structural loads such that the loads become distributed loads thus avoiding development of localised stress concentrators or other localised loading phenomena.

By "streamlined surface" we mean a smoothly varying, continuous surface over which the associated fluid flow passes smoothly with little or no disruption in the streamlines of said fluid flow.

By "continuous load bearing path" we mean that the rearmost surface along which the load bearing path is located does not comprise any discontinuities (or "notches") that would result in generation of stress concentrators or other localised loading phenomena.

The present invention will now be described in more detail, by way of example only, with reference to the accompanying drawings in which:
Figure 1 represents a prior art rotor blade having a span-wise variation in chord length;
Figure 2 represents a cross section (on X-X) of the rotor blade of Figure 1;
Figure 3 illustrates a schematic of a rotor blade having an extension portion appended thereto; and
Figure 4 illustrates a schematic cross section of a rotor blade;
Figure 5 illustrates a schematic cross section of another rotor blade;
Figure 6 illustrates a rotor blade extension portion;
Figure 7 illustrates detail of connection means for an extension portion;
Figure 8 illustrates detail of example interfaces between segments of the extension portion.

Figure 3 illustrates a rotor blade 10 comprising a blade portion 20 and an extension portion 30. A proximal or "root" end 40 of the blade portion 20 is configured to be connected to a rotor hub of a wind turbine installation (not shown), while the distal end 50 of the blade portion 20 extends from the root end 40, and is supported thereby. This distal end 50 represents a "tip" of the blade 10. The length of a rotor blade 10 may be in the range of 20 to 60 metres in length. An extension portion 30 is appended to a rearmost region of the root end 40. In the illustrated embodiment the extension portion 30 is appended at an extreme proximal location, adjacent to where the rotor blade is connected to the rotor hub in use. However, the extension portion 30 may be spaced from this extreme proximal location towards the tip of the blade.

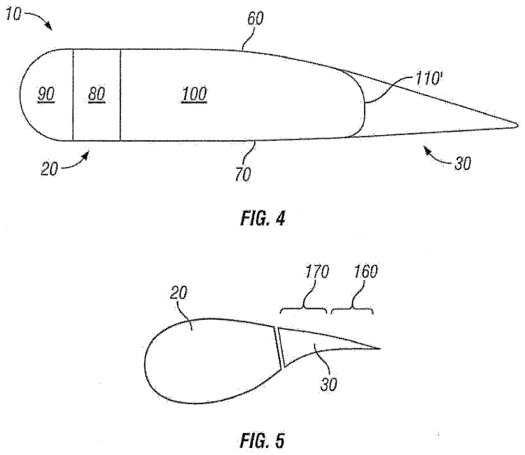

A schematic representing a cross section of the root end 40 of the rotor blade 10 is shown in Figure 4. An upper surface (as depicted in the figure) represents a suction side 60 of the blade portion 20 and a lower surface (as depicted in the figure) represents a pressure side 70 of the blade portion 20.

A representative structure of the blade portion 20 is also indicated. A load bearing spar member 80 is shown, having a leading portion 90 located upstream thereof and a trailing portion 100 located downstream thereof. The blade portion 20 of the rotor blade 10 may be made up from a plurality of sub-components. However, the sub-components are connected to one another in such a way that structural loading is readily transmitted between one sub-component and any sub-components adjacent thereto. In this way, a unitary member is effectively provided, such that structural coherence is achieved.

The blade portion 20 of rotor blade 10 may represent an existing blade or, alternatively, it may represent a specifically designed blade. Figure 4 represents the latter example, a trailing portion 100 of the specifically designed blade is truncated at the root end 40, thus presenting a rearmost surface 110' to which the extension portion 30 may be appended.

The blade portion 20 of rotor blade 10 may be manufactured by separately forming a longitudinally extending, structural spar 80 together with two half-shells. A first half-shell provides the suction surface 60 of the blade 10 and a second half-shell provides the pressure surface 70 of the blade 10. The spar and the two half-shell components are assembled and bonded together to form a cohesive unit. In such an example, the primary loading experienced by the rotor blade 10 is borne by the spar 80. A secondary spar member (not shown) may be provided along the rearmost surface 110'. In this way the structural spar 80 and the secondary spar member form the principal load carrying structure of the rotor blade 10.

In an alternative example, each half-shell component is, itself, reinforced and the separate spar of the previous example is replaced by longitudinal webs that are bonded to each respective half-shell as the blade portion 20 of the rotor blade 10 is assembled. Alternatively, the webs may be omitted, in which case, the loading is carried by the reinforced shell as illustrated in Figure 5. The spar is then, effectively, integral with the rotor blade 10 and the cohesive unit bears any loading in a more distributed fashion.

In normal use, once assembled in a wind turbine installation, the root end 40 of the rotor blade 10 travels slower than the tip end 50 and, consequently, the fluid travelling thereover is correspondingly slower. In order to achieve the preferred aerodynamic loading pattern on the rotor blade 10, it is desirable to increase the chord length of the blade 10 at the root end 40. Accordingly, as illustrated in Figure 3, an extension portion 30 is appended to a rear-most surface 110', extending from a rear-most edge 110 of the trailing portion 100 of the blade portion 20, at the root end 40 thereof. The extension portion 30 provides a continuation of the suction surface 60 of the blade portion 20 of the rotor blade 10 and the corresponding pressure surface 70 of the blade portion 20 of the rotor blade 10. The continuation of these surfaces 60, 70 allows the flow pattern, established on the main portion 20 of the rotor blade 10, to be extended.

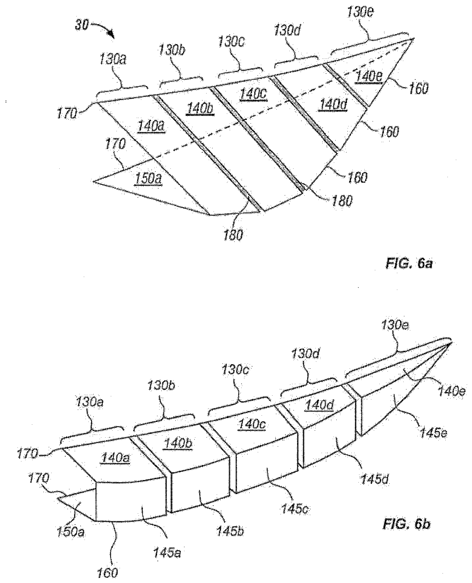

The extension portion 30 is illustrated in more detail in Figure 6a. The extension portion 30 comprises a number of segments 130a, 130b, 130c, 130d, 130e, in this example, five segments are provided. However, more or fewer segments could readily be used.

In this example, adjacent segments are marginally spaced from one another in a span-wise sense as illustrated, with gaps 180 between the adjacent segments. Each segment 130a-e comprises two surfaces, a first surface 140a-e and a second surface 150a-e. For any particular segment, say 130a the first surface 140a is connected to the second surface 150a in a distal region 160 of the extension portion 30. The surfaces 140a, 150a are separated from one another in a proximal region 170 of the extension portion 30.

The surfaces are formed from a lightweight material in order to minimise the contribution of the extension portion 30 to the overall weight of the rotor blade 10 and hence to edge-wise loads that are experienced thereby. Example materials include, but are not limited to, fibre reinforced polymers (e.g. a glass fibre reinforced plastics material), thermoplastic materials, wood and laminate materials.

The connection between surfaces 140a, 150a in a distal region 160 may be a hinged connection to enable the two surfaces to move or flex relative to one another. Alternatively the connection may be a bonded connection or the two surfaces may be formed from a single folded or otherwise formed sheet material such that relative rotation between the two surfaces is inhibited.

In an example of the invention as shown in Figure 6b, the extension portion 30 has a truncated trailing edge. Each segment 130a-e comprises three surfaces, a first surface 140a-e which forms the suction surface of the extension portion; a second surface 150a-e which forms the pressure surface of the extension portion; and a third surface 145a-e which forms a truncated trailing surface. Thus the surfaces 140a, 150a are separated from one another in a proximal region 170 of the extension portion 30 and in a distal region 160 of the extension portion 30. Each segment 130a-e in Figure 6b is a rigid panel formed from fibre composite in a "U" shape.

The truncated trailing edge of Figure 6b experiences smaller strain magnitudes under loading than the trailing edge shown in Figure 6a. This is because the truncated trailing edge is situated closer to the neutral axis of the blade portion 20.

As shown, the extension portion 30 is connected to and supported by the blade portion 20 in a cantilevered configuration. The connection of each respective surface 140a, 150a to the rearmost surface 110' of the trailing portion 100 is preferably a connection that permits some longitudinal degree of freedom.

The blade portion 20 may be designed such that the rear-most edge 110' is formed from a material which in an extreme case is at the limit of its design strength. For example, when the blade portion 20 experiences edgewise bending, the rear-most edge 110' will experience cyclic tensile and compressive forces. The rear-most edge 110' is close, in a chordwise direction, to the elastic centre of the blade portion 20 and the rear-most edge 110' is designed so that when it is in tension, it experiences a maximum permissible allowable strain (i.e. it only experiences elastic strain rather than plastic strain) so the stress in the rear-most edge 110' is kept within an allowed limit. However, the provision of the extension portion 30 allows the chord of the blade portion 20 to be extended while keeping the stress experienced by the material of the segments 130a-e below an allowable stress limit; even though the segments 130a-e are disposed further, in a chord-wise direction, from the elastic centre of the blade portion 20. This is because the gaps 180 between the segments 130a-e interrupt the transfer of the tensile loading along the distal region 160. As such, the chordwise dimension of the blade portion 20 is extended outside the principal load carrying structure, but the stain and stress experienced in the extension portion 30 is kept within allowable limits; even when the material which forms the rear most edge 110' is loaded to its strength limit.

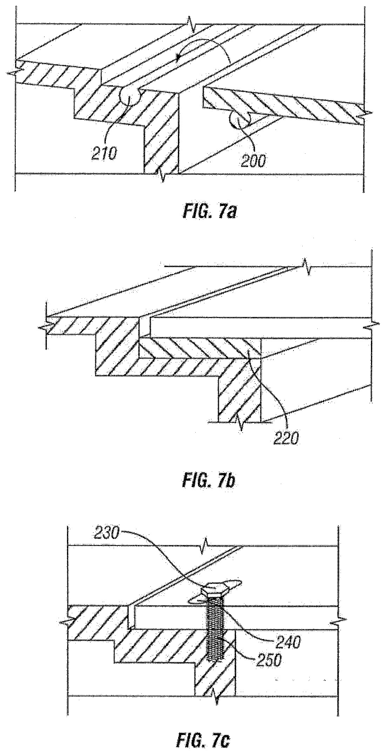

Figures 7a, 7b and 7c illustrate some examples of connection means, each displaying some longitudinal degree of freedom that may be used between the blade portion 20 and the extension portion 30. In a connection means of the type shown in Figure 7a, a complementary key and associated keyway are formed on respective cooperating surfaces of the blade portion 20 and extension portion 30. In this particular example, a substantially cylindrical key or protruding member 200 is formed on an underside of the first surface (e.g. 140a) and a corresponding, substantially circular sectioned, recess 210 has been formed on a cooperating surface of the blade portion 20.

Upon assembly, the protruding member is slid into the recess and the first surface 140a retains some freedom to slide (longitudinally) with respect to the blade portion 20.

In another embodiment, as illustrated in Figure 7b, an elastomeric or similarly compliant, pad 220 is provided between cooperating surfaces of the blade portion 20 and the first or second surface 140a, 150a. The pad 220 is bonded to each of the cooperating surfaces and is made from a material that has a greater flexibility than the material of either the blade portion 20 or the surface 140a, 150a. This flexibility permits limited relative movement between the cooperating surfaces, say in the range of 1 mm to 10mm. Such an elastomeric material may be a rubber material having a low shear modulus and a poison's ratio of 0.5.

In a further embodiment, as illustrated in Figure 7c, the connection means comprises a bolt 230 or similar fixing arrangement requiring a shaft to be inserted through a hole formed in one or each surface. In particular, in this example, an elongate guide hole 240 is provided in the first surface 140a of the extension portion 30 and a receiving hole 250 is provided in the cooperating surface of the blade portion 20. Upon assembly, the cooperating surfaces are aligned and the bolt 230 is inserted through the guide hole 240 and retained (by a captive nut or some such means) in the receiving hole 250.

Clearance is maintained such that longitudinal movement of the bolt 230 within the elongate guide hole 240 can be achieved. Thus a degree of longitudinal freedom of movement is achieved between the extension portion 30 and the blade portion 20. Relative longitudinal movement in the range of 0.1 mm to 10mm may be effected.

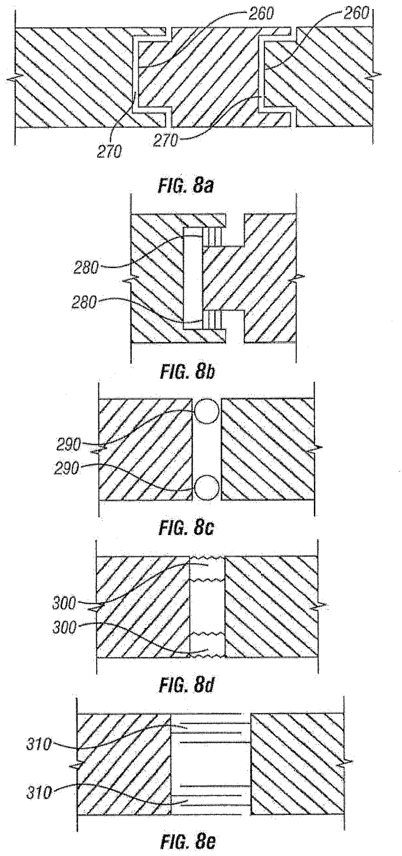

In order to maintain a streamlined or "fair" fluid flow over the rotor blade 10, it is desirable to minimise ingress or egress of fluid flow between the segments 130a-e. However, it is also desirable to maintain the freedom of movement in the span-wise direction so that longitudinal loads, particularly the edge-wise loads, are not transmitted between the segments. Consequently, sealing means are provided between adjacent segments. Example sealing means are illustrated in Figures 8a to 8e.

In Figure 8a, lateral edges of adjacent segments are provided with cooperating profiles. Protrusions 260 formed on one segment, say 130c, are configured to mate with recesses 270 formed on the adjacent segment, say 130b. Once the adjacent segments 130b, 130c are assembled, an overlap in material is provided which inhibits fluid flow through the thickness of the respective surface. However, a clearance is provided as illustrated to allow a degree of freedom, say 0.1 mm to 2mm in the span-wise sense to be retained between segments.

Figure 8b, illustrates a similar configuration to that shown in Figure 8a, wherein additional sealing members are introduced into the clearance. Preferably, the sealing members are brush seals 280 as illustrated or lip seals, either of which would permit some movement and, therefore, retain the span-wise freedom between the segments.

In Figures 8c to 8e the lateral edges of adjacent segments need not be provided with mating profiles. As illustrated, the cooperating profiles of adjacent segments are substantially planar. In Figure 8c, two elastomeric sealing members 290 are provided between cooperating surfaces, say 140b, 140c, of adjacent segments, 130b, 130c. The sealing members 290 are bonded to each surface 140b, 140c. Adjacent segments 130b, 130c can, therefore, experience some relative movement therebetween and the compliance of the elastomeric sealing members 290 accommodates the movement whilst retaining a seal between the segments to prevent leakage. Such an elastomeric material may be a rubber material having a low shear modulus and a poison's ratio of 0.5.

Inflatable and/or bellows type sealing members 300 may be provided in place of the elastomeric sealing members 290, as illustrated in Figure 8d or, alternatively, labyrinth sealing members 310 may be provided as illustrated in Figure 8e.

In operation, the rotor blade 10 is exposed to a moving air stream. The interaction between the air stream and the rotor blade 10 causes loads to be exerted on the blade and the blade is consequently displaced. As the rotor blade 10 rotates around the hub, the loads experienced thereby constantly change as the aspect of the blade 10 differs depending on its location at any point in time. In particular, edge-wise loads are induced in each lateral edge of the blade portion, these edge-wise loads are generated primarily by the action of the weight of the rotor blade 10.

As fluid passes over the rotor blade 10 primary load paths are retained within the blade portion 20 of the rotor blade 10. Introduction of the extension portion 30 enables the blade portion 20 to retain a more constant chord, whilst the rotor blade 10 achieves a larger chord locally, thus optimising aerodynamic performance thereof. Consequently, the rearmost edge 110 of the blade portion 20 is significantly straighter than is the case when an extension portion 30 is not used. By straightening the rearmost edge, chordwise loading caused by directing loads around an extreme trailing edge of a rotor blade 10 is reduced and structural loading and design of the rotor blade 10 is, thus, enhanced. In particular, costs associated with the rotor blade 10 may therefore, be reduced.

Introduction of the extension portion 30 at a rearmost portion of the blade portion 20 serves to enhance the fluid flow over the rotor blade 10 at the root end 40 such that an optimum amount of lift, i.e. efficient loading of the rotor blade 10, is achieved in this root region 40. Aerodynamic loads exerted on the extension portion 30 are transmitted to the blade portion 20 through the connection means, but transmission of loads to the extension portion 30 are inhibited.

Indeed, loading of the extension portion 30 is notably light when transmission of the edge-wise loads is inhibited (if not prevented) from the surface 110', 110 of the blade portion 20 to the extension portion 30. Consequently, significant increases in chord-wise length can be introduced at the root end 40 of the rotor blade 10 without incurring significant loading in this area and without requiring the remainder of the rotor blade 10 to be significantly reinforced to accommodate additional loading.

The invention has been described with reference to specific examples and embodiments. However, it should be understood that the invention is not limited to the particular examples disclosed herein but may be designed and altered within the scope of the invention in accordance with the claims.

## Claims

1. A wind turbine rotor blade extension portion (30) configured to be connectable to a rotor blade (10), the extension portion comprising a plurality of segments (130), located adjacent one another in a span-wise sense, an interface between adjacent segments being configured to inhibit transmission of loads between the segments, wherein each segment comprises:
a first surface (140) forming a suction side;
a second surface (150) forming a pressure side; and
a third surface (145) forming a trailing surface;
the first surface being spaced from the second surface at a proximal region (170) of the extension portion (30) and the third surface connecting the first surface and the second surface at a distal region of the extension portion, to thereby generate an extended trailing portion of a rotor blade (10) to which the extension portion is connected, in use; **characterised in that**
sealing means (280, 290, 300, 310) are provided between adjacent segments (130) to inhibit leakage of fluid therethrough.

2. An extension portion (30) according to Claim 1, wherein the segment comprises one of the group of a fibre reinforced plastics material, a thermoplastic material, wood and a laminate material.

3. An extension portion (30) according to Claim 1 or Claim 2, wherein the first (140) and second (150) surfaces of each segment (130) are formed from a single composite panel.

4. An extension portion (30) according to any preceding claim, wherein lateral edges of adjacent segments (130), extending in a substantially chord-wise direction, comprise cooperating, protruding sections (260) configured to slideably interconnect with one another to permit longitudinal relative movement between the adjacent segments.

5. An extension portion (30) according to Claim 4, wherein the sealing means comprises one of the group of a brush seal (280) and a lip seal, wherein said seal is located between the cooperating, protruding (260) sections of adjacent segments (130).

6. An extension portion (30) according to Claim 4 or Claim 5, wherein a sealing member of the sealing means comprises an elastomeric material (290).

7. An extension portion (30) according to any of Claims 1 to 3, wherein lateral edges of adjacent segments (130), extending in a substantially chord-wise direction, comprise a planar, or substantially planar, profile and the segments are spaced from one another.

8. An extension portion (30) according to Claim 7, wherein the sealing member is one of the group of an elastomeric seal (290), an inflatable seal (300), a bellows seal (300) and a labyrinth seal (310).

9. A wind turbine rotor blade (10) comprising: a structurally coherent, blade portion (20) comprising: a leading portion configured to receive fluid incident on the rotor blade; and a trailing portion (110'), located downstream of the leading portion and configured to smoothly convey fluid passing thereover from the leading portion, wherein a root region (40) of the blade portion is configured to be connectable to a hub of a wind turbine and the blade portion is configured to smoothly transfer loads experienced thereby to the root region of the blade portion for transfer to the hub; and an extension portion (30), according to any preceding claim, wherein the extension portion is configured to be appendable to the trailing portion (110') of the blade portion.

10. A rotor blade (10) according to Claim 9, wherein the extension portion (30) is appended to a root region of the trailing portion.

11. A rotor blade (10) according to Claim 9 or Claim 10, wherein an interface between the extension portion (30) and the trailing portion (110') comprises a longitudinally extending protrusion (200), formed on one of the extension portion and the trailing portion and a cooperating, longitudinally extending retaining recess (210), formed on the other of the extension portion and the trailing portion.

12. A rotor blade (10) according to Claim 9 or Claim 10, wherein an interface between the extension portion (30) and the trailing portion (110') comprises a longitudinally extending pad (220), connected to each of the extension portion and the trailing portion, wherein the pad comprises a material having a greater compliance than respective materials of the extension portion and the trailing portion.

13. A rotor blade (10) according to Claim 9 or Claim 10, wherein an interface between the extension portion (30) and the trailing portion (110') comprises a bolt (230), or similar fixing mechanism, configured to pass through a guide hole (240) formed in one portion and be retained relative to the other portion, wherein the guide hole is elongate in the span-wise direction.

14. A rotor blade (10) according to any of Claims 9 to 13, wherein the blade portion comprises a truncated profile, whereby the root region of the trailing portion is configured to receive the extension portion (30).

15. A wind turbine installation comprising a rotor hub supported by a tower, comprising a rotor blade (10) according to any of Claims 9 to 14, wherein the, or each rotor blade is appended to the rotor hub.

## Patentansprüche

1. Erweiterungsabschnitt (30) für ein Windturbinenrotorblatt, der konfiguriert ist, um mit einem Rotorblatt (10) verbunden werden zu können, wobei der Erweiterungsabschnitt mehrere Segmente (130), die in der Art einer Spannweitenrichtung zueinander benachbart angeordnet sind, eine Schnittstelle zwischen den benachbarten Segmenten, die konfiguriert ist, um einen Übertrag von Lasten zwischen den Segmenten zu verhindern, umfasst, wobei jedes Segment umfasst:
eine erste Oberfläche (140), die eine Saugseite bildet;
eine zweite Oberfläche (150), die eine Druckseite bildet; und
eine dritte Oberfläche (145), die eine Hinterkantenoberfläche bildet;
wobei die erste Oberfläche an einem nahen Bereich (170) des Erweiterungsabschnitts (30) von der zweiten Oberfläche beabstandet angeordnet ist, und wobei die dritte Oberfläche die erste Oberfläche und die zweite Oberfläche an einem entfernten Bereich des Erweiterungsabschnitts verbindet, um dadurch ein erweitertes Hinterkantenteil eines Rotorblatts (10) herzustellen, mit dem der Erweiterungsabschnitt im Gebrauch verbunden wird, **dadurch gekennzeichnet, dass**
Abdichtungsmittel (280, 290, 300, 310) zwischen benachbarten Segmenten (130) bereitgestellt sind, um eine Leckage eines Fluids, das hindurchströmt, zu verhindern.

2. Erweiterungsabschnitt (30) nach Anspruch 1, wobei das Segment ein Material aus der Gruppe faserverstärkter Kunststoffe und/oder eines thermoplastischen Materials und/oder eines Holzmaterials und/oder aus der Gruppe eines Laminatmaterials umfasst.

3. Erweiterungsabschnitt (30) nach Anspruch 1 oder 2, wobei die ersten (140) und die zweiten Oberflächen (150) jedes Segments (130) aus einer einzelnen Verbundplatte gebildet sind.

4. Erweiterungsabschnitt (30) nach einem vorhergehenden Anspruch, wobei Seitenkanten von benachbarten Segmenten (130), die sich im Wesentlichen in einer Schwenkrichtung erstrecken, zusammenwirkende, überstehende Abschnitte (260) umfassen, die konfiguriert sind, um miteinander gleitend verbunden zu werden, um eine relative Längsbewegung zwischen benachbarten Segmenten zu ermöglichen.

5. Erweiterungsabschnitt (30) nach Anspruch 4, wobei die Abdichtungsmittel eines aus der Gruppe einer Bürstenabdichtung (280) und/oder einer Lippendichtung umfasst, wobei die Abdichtung zwischen den zusammenwirkenden, überstehenden (260) Abschnitten benachbarter Segmente (130) angeordnet ist.

6. Erweiterungsabschnitt (30) nach Anspruch 4 oder 5, wobei ein Abdichtungselement der Abdichtungsmittel ein elastomeres Material (290) umfasst.

7. Erweiterungsabschnitt (30) nach einem der Ansprüche 1 bis 3, wobei die Seitenkanten von benachbarten Segmenten (130), die sich im Wesentlichen in einer Schwenkrichtung erstrecken, ein ebenes oder im Wesentlichen ein ebenes Profil umfassen, und wobei die Segmente voneinander beabstandet angeordnet sind.

8. Erweiterungsabschnitt (30) nach Anspruch 7, wobei das Abdichtungselement eines aus der Gruppe eines elastomeren Materials (290), einer aufblasbaren Abdichtung (300), einer Balgdichtung (300) und/oder einer Labyrinthdichtung (310) ist.

9. Windturbinenrotorblatt (10), das umfasst: einen strukturell kohärenten Blattabschnitt (20), der umfasst: einen Blattvorderkantenabschnitt, der konfiguriert ist, um ein einfallendes Fluid auf dem Rotorblatt aufzunehmen; und einen Blatthinterkantenabschnitt (110'), der stromabwärts des Blattvorderkantenabschnitts angeordnet ist und konfiguriert ist, um glatt ein Fluid, das darüber von dem Blattvorderkantenabschnitt verläuft, zu befördern, wobei ein Wurzelbereich (40) des Blattabschnitts konfiguriert ist, um mit einer Nabe einer Windturbine verbunden werden zu können, und wobei der Blattabschnitt konfiguriert ist, um Belastungen, die dadurch erfahren werden, glatt an den Wurzelbereich des Blattabschnitts für einen Übertrag an die Nabe zu übertragen; und einen Erweiterungsabschnitt (30) nach einem vorhergehenden Anspruch, wobei der Erweiterungsabschnitt konfiguriert ist, um an dem Blatthinterkantenabschnitt (110') des Blattabschnitts angehängt werden zu können.

10. Rotorblatt (10) nach Anspruch 9, wobei der Erweiterungsabschnitt (30) an einem Wurzelbereich des Blatthinterkantenabschnitts angehängt ist.

11. Rotorblatt (10) nach Anspruch 9 oder 10, wobei eine Schnittstelle zwischen dem Erweiterungsabschnitt (30) und dem Blatthinterkantenabschnitt (110') einen sich in Längsrichtung erstreckenden Überstand (200), der auf dem Erweiterungsabschnitt und/oder dem Blatthinterkantenabschnitt gebildet ist, und eine zusammenwirkende, sich in Längsrichtung erstreckende Halteaussparung (210), die auf dem jeweils anderen Abschnitt des Erweiterungsabschnitts oder des Blatthinterkantenabschnitts gebildet ist, umfasst.

12. Rotorblatt (10) nach Anspruch 9 oder 10, wobei eine Schnittstelle zwischen dem Erweiterungsabschnitt (30) und dem Blatthinterkantenabschnitt (110') einen sich in Längsrichtung erstreckende Unterlage (220) umfasst, die jeweils mit dem Erweiterungsabschnitt und dem Blatthinterkantenabschnitt verbunden ist, wobei die Unterlage ein Material umfasst, das eine größere Nachgiebigkeit als die jeweiligen Materialien des Erweiterungsabschnitts und des Blatthinterkantenabschnitts aufweist.

13. Rotorblatt (10) nach Anspruch 9 oder 10, wobei eine Schnittstelle zwischen dem Erweiterungsabschnitt (30) und dem Blatthinterkantenabschnitt (110') eine Schraube (230) oder einen ähnlichen Befestigungsmechanismus umfasst, der konfiguriert ist, um durch ein Führungsloch (240), das in einem Abschnitt gebildet ist, zu verlaufen und relativ zu dem anderen Abschnitt festgehalten zu werden, wobei das Führungsloch in der Schwenkrichtung langgestreckt ist.

14. Rotorblatt (10) nach einem der Ansprüche 9 bis 13, wobei der Blattabschnitt ein abgeschnittenes gestutztes Profil umfasst, wobei der Wurzelbereich des Blatthinterkantenabschnitts konfiguriert ist, um den Erweiterungsabschnitt (30) aufzunehmen.

15. Windturbineninstallation, die eine Rotornabe, die von einem Turm getragen wird, und ein Rotorblatt (10) nach einem der Ansprüche 9 bis 14 umfasst, wobei das Rotorblatt oder jedes Rotorblatt an die Rotornabe angehängt ist.

## Revendications

1. Partie formant prolongateur de pale de rotor d'éolienne (30) configurée pour pouvoir être reliée à une pale de rotor (10), la partie formant prolongateur comprenant une pluralité de segments (130), situés adjacents les uns aux autres dans le sens de la longueur, une interface entre des segments adjacents étant configurée pour inhiber la transmission de charges entre les segments, dans laquelle chaque segment comprend :
une première surface (140) formant un côté extrados ;
une deuxième surface (150) formant un côté intrados ; et
une troisième surface (145) formant une surface de fuite ;
la première surface étant espacée de la deuxième surface au niveau d'une région proximale (170) de la partie formant prolongateur (30) et la troisième surface reliant la première surface et la deuxième surface au niveau d'une région distale de la partie formant prolongateur, pour produire de ce fait une partie de fuite étendue d'une pale de rotor (10) à laquelle la partie formant prolongateur est reliée, en fonctionnement; **caractérisée en ce que**
des moyens d'étanchéité (280, 290, 300, 310) sont prévus entre les segments adjacents (130) pour inhiber une fuite de fluide à travers ces derniers.

2. Partie formant prolongateur (30) selon la revendication 1, dans laquelle le segment comprend l'un du groupe d'une matière plastique renforcée de fibres, d'une matière thermoplastique, de bois et d'une matière stratifiée.

3. Partie formant prolongateur (30) selon la revendication 1 ou la revendication 2, dans laquelle les première (140) et deuxième (150) surfaces de chaque segment (130) sont formées à partir d'un panneau composite unique.

4. Partie formant prolongateur (30) selon l'une quelconque des revendications précédentes, dans laquelle les bords latéraux de segments adjacents (130), s'étendant sensiblement dans le sens de la corde, comprennent des sections saillantes coopératives, (260) configurées pour s'interconnecter de manière coulissante pour permettre un mouvement relatif longitudinal entre les segments adjacents.

5. Partie formant prolongateur (30) selon la revendication 4, dans laquelle les moyens d'étanchéité comprennent l'un du groupe d'un joint à brosse (280) et d'un joint à lèvre, dans laquelle ledit joint est situé entre les sections saillantes coopératives (260) de segments adjacents (130).

6. Partie formant prolongateur (30) selon la revendication 4 ou la revendication 5, dans laquelle un élément d'étanchéité des moyens d'étanchéité comprend une matière élastomère (290).

7. Partie formant prolongateur (30) selon l'une quelconque des revendications 1 à 3, dans laquelle les bords latéraux de segments adjacents (130), s'étendant sensiblement dans le sens de la corde, comprennent un profil plat, ou sensiblement plat, et les segments sont espacés les uns des autres.

8. Partie formant prolongateur (30) selon la revendication 7, dans laquelle l'élément d'étanchéité est l'un du groupe d'un joint élastomère (290), d'un joint gonflable (300), d'un joint à soufflet (300) et d'un joint à labyrinthe (310).

9. Pale de rotor d'éolienne (10) comprenant : une partie formant pale structurellement cohérente (20) comprenant : une partie d'attaque configurée pour recevoir un fluide incident sur la pale de rotor; et une partie de fuite (110'), située en aval de la partie d'attaque et configurée pour transporter sans à-coup le fluide passant dessus provenant de la partie d'attaque, dans laquelle une région d'emplanture (40) de la partie formant pale est configurée pour pouvoir être reliée à un moyeu d'une éolienne et la partie formant pale est configurée pour transférer sans à-coup des charges subies de ce fait à la région d'emplanture de la partie formant pale pour transfert au moyeu ; et une partie formant prolongateur (30), selon l'une quelconque des revendications précédentes, dans laquelle la partie formant prolongateur est configurée pour pouvoir être ajoutée à la partie de fuite (110') de la partie formant pale.

10. Pale de rotor (10) selon la revendication 9, dans laquelle la partie formant prolongateur (30) est ajoutée à une région d'emplanture de la partie de fuite.

11. Pale de rotor (10) selon la revendication 9 ou la revendication 10, dans laquelle une interface entre la partie formant prolongateur (30) et la partie de fuite (110') comprend une protubérance s'étendant de façon longitudinale (200), formée sur l'une de la partie formant prolongateur et de la partie de fuite et une partie en retrait coopérative s'étendant de façon longitudinale (210), formée sur l'autre de la partie formant prolongateur et de la partie de fuite.

12. Pale de rotor (10) selon la revendication 9 ou la revendication 10, dans laquelle une interface entre la partie formant prolongateur (30) et la partie de fuite (110') comprend une plage s'étendant de façon longitudinale (220), reliée à chacune de la partie formant prolongateur et de la partie de fuite, dans laquelle la plage comprend une matière ayant une élasticité plus grande que les matières respectives de la partie formant prolongateur et de la partie de fuite.

13. Pale de rotor (10) selon la revendication 9 ou la revendication 10, dans laquelle une interface entre la partie formant prolongateur (30) et la partie de fuite (110') comprend un boulon (230), ou un mécanisme de fixation similaire, configuré pour passer à travers un trou de guidage (240) formé dans une partie particulière et pour être retenu par rapport à l'autre partie, dans laquelle le trou de guidage est allongé dans le sens de la longueur.

14. Pale de rotor (10) selon l'une quelconque des revendications 9 à 13, dans laquelle la partie formant pale comprend un profil tronqué, de sorte que la région d'emplanture de la partie de fuite est configurée pour recevoir la partie formant prolongateur (30).

15. installation d'éolienne comprenant un moyeu de rotor supporté par un mât, comprenant une pale de rotor (10) selon l'une quelconque des revendications 9 à 14, dans laquelle la, ou chaque pale de rotor est ajoutée au moyeu de rotor.
